# EUROPÄISCHE PATENTANMELDUNG

(11) **EP 0 761 699 A2**
(43) Veröffentlichungstag der Anmeldung: **12.03.1997**
(21) Anmeldenummer: 96113726.2
(22) Anmeldetag: 28.08.1996
(51) Int. Cl.: C08F 126/10

(54) **Verfahren zur Herstellung von pyrrolidonarmen, niedermolekularen Homopolymerisaten des N-Vinylpyrrolidons**

(30) Priorität: 08.09.1995 DE 19533264
(71) Anmelder: BASF AKTIENGESELLSCHAFT, 67056 Ludwigshafen (DE)
(72) Erfinder: Blankenburg, Rainer, Dr., 67067 Ludwigshafen (DE); Detering, Jürgen, Dr., 67117 Limburgerhof (DE); Huckestein, Brigitta, Dr., 67105 Schifferstadt (DE); Sanner, Axel, Dr., 67227 Frankenthal (DE)

(57) **Zusammenfassung**

Verfahren zur Herstellung von pyrrolidonarmen niedermolekularen Homopolymerisaten des N-Vinylpyrrolidons durch Lösungspolymerisation in wäßrigem Medium in Gegenwart einer radikalbildenden Verbindung, dadurch gekennzeichnet, daß man die Polymerisation in Gegenwart eines Polymerisationsreglers, der eine Transferkonstante Cₓ größer 0,01 aufweist.

## Beschreibung

Die vorliegende Erfindung betrifft ein verfahren zur Herstellung von niedermolekularen Homopolymerisaten des N-Vinylpyrrolidons durch Lösungspolymerisation in wäßrigem Medium in Gegenwart einer radikalbildenden Verbindung.

Die Herstellung von niedermolekularem Polyvinylpyrrolidon durch Polymerisation in alkoholischer Lösung ist beispielsweise aus der US-A 4 053 696 bekannt. Dabei wird die regelnde Wirkung des Lösungsmittels Isopropanol zur Kontrolle des Molekulargewichts genutzt. Dieses Verfahren führt zwar zu Produkten mit einem relativ geringen Anteil an Verunreinigungen, insbesondere an 2-Pyrrolidon, hat aber den Nachteil, daß dabei größere Isopropanolmengen anfallen, die entweder entsorgt oder destillativ gereinigt werden müssen.

In wäßriger Lösung wurde niedermolekulares Polyvinylpyrrolidon bisher in Gegenwart von Wasserstoffperoxid als Starter hergestellt wie beispielsweise in der US-A 2 335 454 beschrieben ist.

H₂O₂ ist bei diesem Verfahren gleichzeitig Starter und Regler. Das Molekulargewicht der so hergestellten Polyvinylpyrrolidon-Polymere wird also durch die H₂O₂-Konzentration eingestellt, niedrige Molekulargewichte entstehen durch hohe H₂O₂-Konzentrationen und umgekehrt. Der Polymerisationsmechanismus dieses Verfahrens wird in - Polymers of N-Vinylpyrrolidone, Synthesis, Characterization and Uses, F. Haaf, A. Sanner, F. Straub, Polymer Journal, Vol. 17, No. 1, pp 143-152 (1985) - beschrieben. Nach diesem Mechanismus entsteht pro Mol eingesetztem H₂O₂ ein Mol 2-Pyrrolidon, d.h. insbesondere die Polyvinylpyrrolidon-Polymere mit niedrigen Molekulargewichten enthalten hohe 2-Pyrrolidon-Konzentrationen als Verunreinigung.

In der DE-A 1 021 121 ist die Herstellung niedermolekularer Polyvinylpyrrolidone unter Verwendung Azostartern beschrieben, wobei die Polymerisation im Alkohol/Wasser-Gemischen durchgeführt wird.

Aus der WO 94/26796 ist die Herstellung von niedermolekularen Copolymerisaten aus N-Vinylimidazol und N-Vinylpyrrolidon unter Verwendung eines Azostarters in wäßriger Lösung in Gegenwart einer Schwefelverbindung als Regler bekannt.

Aufgabe der vorliegenden Erfindung war es, ein verbessertes Verfahren zur Herstellung von niedermolekularen Homopolymerisaten des N-Vinylpyrrolidons durch Lösungspolymerisation in wäßrigem Medium zu finden.

Demgemäß wurde ein Verfahren zur Herstellung von niedermolekularen Homopolymerisaten des N-Vinylpyrrolidons in wäßrigem Medium unter Verwendung einer radikalbildenden Verbindung, welches dadurch gekennzeichnet ist, daß man die Polymerisation in Gegenwart von Polymerisationsreglern, die eine Transferkonstante Cₓ größer 0,01 aufweisen, durchführt.

Als radikalbildende Verbindungen werden bevorzugt wasserlösliche Azostarter gewählt, wie beispielsweise die kommerziell erhältlichen: 2,2'-Azobis[2-(2-imidazolin-2-yl)propan]dihydrochlorid, 2,2'-Azobis(2-amidinopropan)dihydrochlorid, 4,4'-Azobis(4-cyanpentansäure)dinatriumsalz oder 2,2'-Azobis(isobutyramid)dihydrat.

Weiterhin eignen sich auch nicht oder nur eingeschränkt in Wasser lösliche Azoverbindungen wie 2,2'-Azobisisobutyronitril, 2,2'-Azobis(2-methylbutyronitril), Dimethyl-2,2'-azobisisobutyrat, 2,2'-Azobis(4-methoxy-2,4-dimethylvaleronitril), 2,2'-Azobis(2,4-dimethylvaleronitril) oder 1,1'-Azobis(1-cyclohexancarbonitril).

Ebenso eignen sich auch symmetrische Peroxide als Radikalbildner, beispielsweise Di-tert.-butylperoxid, Di-tert.-amylperoxid oder Diacylperoxide wie Dilauroyl-, Didecanoyl-, Dibenzoyl- und Dioctanoylperoxid, sowie Perester wie tert.-Butylperoxipivalat, tert.-Amylperoxipivalat, tert.-Butylperoxibenzoat oder tert.-Butylperoxineodecanoat.

Die Polymerisationstemperaturen sind so zu wählen, daß die Halbwertszeiten des Starterzerfalls bei 0,5 bis 5 Stunden liegen, was üblicherweise im Bereich von 60° bis 130°C der Fall ist. Gegebenenfalls kann die Polymerisation auch unter erhöhtem Druck durchgeführt werden.

Die Azoverbindungen können in Mengen von 0,1 bis 10 Gew.-% (bezogen auf die Menge an N-Vinylpyrrolidon), bevorzugt 0,5 bis 5 Gew.-% eingesetzt werden. Es empfiehlt sich, die Azoverbindungen als Lösung einzusetzen, wobei die wasserlöslichen Azoverbindungen bevorzugt in rein wäßriger Lösung eingesetzt werden. Man kann auch C₁-C₄-Alkanole, bevorzugt Methanol, Ethanol oder Isopropanol, gegebenenfalls als Gemisch mit Wasser, als Lösungsmittel verwenden, wobei die organischen Lösungsmittel vorzugsweise für die nicht oder nur wenig in Wasser löslichen Azoverbindungen eingesetzt werden können.

Als Polymerisationsmedium wird Wasser verwendet, welches bis zu 10 Gew.-%, bevorzugt weniger als 5 Gew.-%, der oben genannten Alkanole enthalten kann. Das Polymerisationsmedium soll nur soviel Alkohol enthalten, wie für das Auflösen und Zudosieren der nicht oder nur eingeschränkt wasserlöslichen radikalbildenden Verbindungen notwendig ist. Besonders bevorzugt ist die Polymerisation in rein wäßrigem Medium unter Verwendung wasserlöslicher Azoverbindungen.

Die Polymerisation wird bevorzugt bei pH-Werten im Bereich von 6 bis 9 durchgeführt, um eine Hydrolyse des N-Vinylpyrrolidons zu vermeiden. Es empfiehlt sich daher die Lösungen der Einsatzstoffe vor Beginn der Polymerisation mit einer geeigneten Base, beispielsweise wäßrige Natronlauge, auf den geeigneten pH-Bereich einzustellen.

Geeignete Polymerisationsregler sind erfindungsgemäß solche Regler, die eine Transferkonstante Cₓ größer 0,01, bevorzugt 0,2 bis 50, aufweisen. Zur Definition der Transferkonstante siehe "Polymer handbook", Ed. J. Brandrup und E.H. Immergut, 3rd Ed., Kap. II, Seite 81 f..

Als Regler kommen beispielsweise Allylverbindungen wie Allylalkohol oder Allylchlorid, aliphatische oder araliphatische Halogenkohlenwasserstoffe wie beispielsweise Chloroform, Tetrachlorkohlenstoff oder Benzylbromid, oder Aldehyde wie Acetaldehyd, Crotonaldehyd sowie Saccharin in Betracht.

Die Polymerisation wird bevorzugt in Gegenwart von Polymerisationsreglern durchgeführt, die Schwefel in gebundener Form enthalten. Verbindungen dieser Art sind beispielsweise anorganische Hydrogensulfite, Disulfite und Dithionite oder organische Sulfide, Disulfide, Polysulfide, Sulfoxide, Sulfone und Mercaptoverbindungen. Folgende Polymerisationsregler werden beispielhaft genannt: Di-n-butylsulfid, Di-n-octylsulfid, Diphenylsulfid, Thiodiglykol, Ethylthioethanol, Diisopropyldisulfid, Di-n-butyldisulfid, Di-n-hexyldisulfid, Diacetyldisulfid, Diethanolsulfid, 2,2'-Thio-diethanol, Di-t-butyltrisulfid und Dimethylsulfoxid. Bevorzugt als Polymerisationsregler eingesetzte Verbindungen sind Mercaptoverbindungen, Dialkylsulfide, Dialkyldisulfide und/oder Diarylsulfide. Beispiele für diese Verbindungen sind Ethylthioglykolat, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan oder n-Dodecylmercaptan. Besonders bevorzugt eingesetzte Polymerisationsregler sind Mercaptoalkohole und Mercaptocarbonsäuren.

Die Polymerisationsregler werden in Mengen von 0,1 bis 15, vorzugsweise 0,5 bis 10 Gew.-%, bezogen auf die bei der Polymerisation eingesetzten Monomeren, verwendet. Bei der Polymerisation können selbstverständlich auch Mischungen der erfindungsgemäß einzusetzenden Polymerisationsregler angewendet werden.

Die Monomeren können nach den üblichen Verfahrenstechniken polymerisiert werden, z. B. nach der sogenannten Batch-Polymerisation, bei der man 1-Vinylpyrrolidon, Regler und Initiator in einem Lösemittel vorlegt und auf die Polymerisationstemperatur erwärmt. Das Reaktionsgemisch wird solange bei der Polymerisationstemperatur gerührt, bis die Umsetzung mehr als 99,9 % beträgt. Die Zugabe des Initiators kann bei diesem Verfahren gegebenenfalls auch erst nach Erreichen der Polymerisationstemperatur erfolgen.

Weitere Verfahrensvarianten zur Polymerisation stellen die Zulaufmethoden dar, die bevorzugt angewandt werden. Bei diesen Verfahrensvarianten wird zu einem Gemisch aus Vinylpyrrolidon und einem Lösemittel bei der Polymerisationstemperatur innerhalb einer bestimmten Zeit eine Lösung des Schwefel in gebundener Form enthaltenen Polymerisationsreglers und eine Initiatorlösung kontinuierlich oder portionsweise zugegeben. Es ist jedoch auch möglich, eine Mischung aus Regler und Initiator der auf Polymerisationstemperatur erwärmten Vorlage zuzudosieren. Eine andere Methode besteht darin, den Initiator unterhalb oder bei der Polymerisationstemperatur in die Vorlage zu geben und nur den Regler oder eine Lösung des Reglers nach Erreichen der Polymerisationstemperatur innerhalb eines vorgegebenen Zeitraums dem Reaktionsgemisch zuzuführen. Eine weitere Variante der Zulauftechnik besteht darin, daß man die Vorlage auf eine Temperatur erwärmt, bei der die Polymerisation abläuft und dann Regler, Initiator und Monomere in getrennten Zuläufen oder gemeinsam zugibt. Bei dieser Technik dient vorzugsweise Wasser oder ein Gemisch aus Wasser, Monomer und/oder Initiator und/oder Regler als Vorlage. Besonders bevorzugt ist erfindungsgemäß eine Verfahrensweise, bei der die Schwefel in gebundener Form enthaltenden Polymerisationsregler während der Polymerisation der Monomeren kontinuierlich oder portionsweise zudosiert werden.

Das Molekulargewicht nach dem Gewichtsmittel M_{w} der so hergestellten Polyvinylpyrrolidon-Polymerisate liegt in dem Bereich von 2000 bis 50000, vorzugsweise 5000 bis 40000. Diese Polymerisate haben K-Werte von 10 bis 50 (bestimmt wie beschrieben in H. Fikentscher "Systematik der Cellulosen aufgrund ihrer Viskosität in Lösung", Cellulose-Chemie 13, (1932) 58-64 und 71-74. Die bei der Polymerisation entstehenden Lösungen können im Anschluß an den Polymerisationsprozeß einer physikalischen oder chemischen Desodorierung unterworfen werden. Darunter versteht man u.a. eine Nachbehandlung der Polymerlösung mittels Wasserdampfreinigungen aus der Lösung entfernt werden. Bei einer chemischen Nachbehandlung erfolgt der Zusatz von Polymerisationsinitiatoren oder Mischungen mehrerer Polymerisationsinitiatoren und Erhitzen der Polymerlösungen gegebenenfalls auf Temperaturen, die oberhalb der Polymerisationstemperatur liegen.

Die wäßrigen Polymerisatlösungen werden üblicherweise so hergestellt, daß sie Feststoffgehalte von 20 bis 60 Gew.-% aufweisen.

Die wäßrigen Polyvinylpyrrolidon-Lösungen können gegebenenfalls, mit einem - dem Stand der Technik entsprechenden - Trocknungsverfahren in feste Pulver überführt werden. Als Trocknungsverfahren zur Erzeugung pulverförmiger Polymerisate kommen alle solchen in Frage, die zur Trocknung aus wäßriger Lösung geeignet sind. Bevorzugte Verfahren sind die Sprühtrocknung, die Sprühwirbelschichttrocknung, die Walzentrocknung und die Bandtrocknung, weniger bevorzugte aber auch anwendbare Verfahren sind die Gefriertrocknung und die Gefrierkonzentrierung.

Die nach dem erfindungsgemäßen Verfahren erhältlichen Homopolymerisate des N-Vinylpyrrolidons sind arm an Verunreinigungen wie 2-Pyrrolidon oder N-Vinylpyrrolidon. Sie weisen bevorzugt Gehalte an 2-Pyrrolidon unter 0,5 Gew.-%, bezogen auf das Polymerisat, auf.

Bevorzugte Anwendungsgebiete des erfindungsgemäß erhaltenen niedermolekularen und zugleich pyrrolidonarmen Polyvinylpyrrolidons sind kosmetische und pharmazeutische Zubereitungen, besonders lagerstabile Desinfektionsmittel im Komplex mit Jod und Waschmitteladditive.

Die in den nachstehenden Beispielen genannten Restmonomerengehalte wurden gaschromatographisch bestimmt.

### Beispiel 1

Es wurden zunächst die folgenden Lösungen vorbereitet:
1. Monomerzulauf, bestehend aus 500 g N-Vinylpyrrolidon und 120 g Wasser.
2. Starterzulauf 1, bestehend aus 7,5 g 2,2'-Azobis(2-methyl-butyronitril) gelöst in 80 g Isopropanol.
3. Reglerzulauf 1, bestehend aus 50 g Wasser und 5 g 2-Mercaptoethanol.
4. Starterzulauf 2, bestehend aus 2,5 g 2,2'-Azobis(2-methyl-butyronitril) gelöst in 20 g Isopropanol
5. Reglerzulauf 2, bestehend aus 80 g Wasser und 1,7 g 2-Mercaptoethanol.

Der pH-Wert der Lösungen 1, 3 und 5 wurde mit verdünnter Natronlauge auf einem Bereich von 6 bis 8 eingestellt.

Als Vorlage wurden 800 g Wasser in einen Laborrührkessel gegeben, mit Stickstoff gespült und auf 85°C Innentemperatur erwärmt. Dann wurden gleichzeitig der Monomerzulauf, der Reglerzulauf 1 und der Starterzulauf 1 gestartet und mit konstanter Geschwindigkeit gleichzeitg in 3 Stunden zugefahren. Zur Vervollständigung der Polymerisation wurde im Anschluß der Starterzulauf 2 zugegeben und der Reglerzulauf 2 in einer halben Stunde zugefahren. Die Polymerisationstemperatur von 85°C wurde noch weitere 2 Stunden gehalten. Zur Entfernung flüchtiger Verunreinigungen wurde eine Wasserdampfdestillation durchgeführt und dabei 500 g Wasser abdestilliert.

Die erhaltene farblose und niederviskose Lösung wies einen Feststoffgehalt von 35 Gew.-% (26 Gew.-%) auf und der K-Wert des Produktes (gemessen 1 Gew.-%ig in Wasser) lag bei 20,0 (20,0). Als Verunreinigungen wurden 0,04 Gew.-% (0,024 Gew.-%) N-Vinylpyrrolidon und 0,087 Gew.-% (0,056 Gew.-%) Pyrrolidon gefunden.

Die Werte in Klammern beziehen sich auf eine Versuchswiederholung.

### Beispiel 2

Es wurden zunächst die folgenden Lösungen vorbereitet:
1. Monomerzulauf, bestehend aus 500 g N-Vinylpyrrolidon und 120 g Wasser.
2. Starterzulauf 1, bestehend aus 7,5 g 2,2'-Azobis(2-amidinopropan)dihydrochlorid gelöst in 170 g Wasser.
3. Reglerzulauf, bestehend aus 50 g Wasser und 5 g 2-Mercaptoethanol.
4. Starterzulauf 2, bestehend aus 2,5 g 2,2'-Azobis(2-amidinopropan)dihydrochlorid gelöst in 50 g Wasser.

Der pH-Wert aller Lösungen wurde mit verdünnter Natronlauge auf einen Bereich von 6 bis 8 eingestellt.

Fahrweise analog Beispiel 1, jedoch ohne den Reglerzulauf. 2.

Die erhaltene farblose und niederviskose Lösung wies einen Feststoffgehalt von 24,0 Gew.-% auf und der K-Wert des Produktes (gemessen 1 Gew.-%ig in Wasser) lag bei 21,7. Als Verunreinigungen wurden 0,014 Gew.-% N-Vinylpyrrolidon und 0,09 Gew.-% Pyrrolidon gefunden.

### Beispiel 3

Es wurden die gleichen Lösungen wie in Beispiel 2 verwendet, jedoch wurden im Reglerzulauf 10 g 2-Mercaptoethanol eingesetzt.

Fahrweise analog Beispiel 1, jedoch ohne den Reglerzulauf 2.

Die erhaltene farblose und niederviskose Lösung wies einen Feststoffgehalt von 25,4 Gew.-% auf und der K-Wert des Produktes (gemessen 1 Gew.-%ig in Wasser) lag bei 17,6. Als Verunreinigungen wurden 0,015 Gew.-% N-Vinylpyrrolidon und 0,095 Gew.-% Pyrrolidon gefunden.

### Beispiel 4

Es wurden die gleichen Lösungen, wie im Beispiel 2 verwendet, jedoch wurden im Reglerzulauf 20 g 2-Mercaptoethanol eingesetzt.

Fahrweise analog Beispiel 1, jedoch ohne den Reglerzulauf 2.

Die erhaltene farblose und niederviskose Lösung wies einen Feststoffgehalt von 31 Gew.-% (22 Gew.-%) auf und der K-Wert des Produktes (gemessen 1 Gew.-%ig in Wasser) lag bei 13,7 (14,6). Als Verunreinigungen wurden 0,024 Gew.-% (0,033 Gew.-%) N-Vinylpyrrolidon und 0,072 Gew.-% (0,11 Gew.-%) Pyrrolidon gefunden.

Die Werte in Klammern beziehen sich auf eine Versuchswiederholung.

### Beispiel 5

Es wurden zunächst die folgenden Lösungen vorbereitet:
1. Vorlage, bestehend aus 500 g N-Vinylpyrrolidon, 1100 g Wasser, 7,5 g 2,2'-Azobis(2-amidinopropan)dihydrochlorid und 10 g 2-Mercaptoethanol.
2. Starterzulauf, bestehend aus 2,5 g 2,2'-Azobis(2-amidinopropan)dihydrochlorid gelöst in 50 g Wasser.
3. Reglerzulauf, bestehend aus 80 g Wasser und 1,7 g 2-Mercaptoethanol.

Der pH-Wert aller Lösungen wurde mit verdünnter Natronlauge auf einen Bereich von 6 bis 8 eingestellt.

Die Vorlage wurde in einen Laborrührkessel gegeben, mit Stickstoff gespült und auf 85°C Innentemperatur erwärmt. Die Temperatur wurde eine halbe Stunde gehalten, dann wurden zur Vervollständigung der Polymerisation gleichzeitig der Starterzulauf und der Reglerzulauf in einer halben Stunde zugefahren. Zur Entfernung flüchtiger Verunreinigungen wurde eine Wasserdampfdestillation durchgeführt und dabei 500 g Wasser überdestilliert.

Die erhaltene farblose und niederviskose Lösung wies einen Feststoffgehalt von 24,7 Gew.-% auf und der K-Wert des Produktes (gemessen 1 Gew.-%ig in Wasser) lag bei 49,4. Als Verunreinigungen wurden 0,045 Gew.-% N-Vinylpyrrolidon und 0,005 Gew.-% Pyrrolidon gefunden.

### Beispiel 6

Es wurden zunächst die folgenden Lösungen vorbereitet:
1. Vorlage, bestehend aus 500 g N-Vinylpyrrolidon, 1200 g Wasser.
2. Starterzulauf, bestehend aus 5 g 2,2'-Azobis(2-methyl-butyronitril) gelöst in 80 g Wasser.
3. Reglerzulauf, bestehend aus 100 g Wasser und 15 g 2-Mercaptoethanol.

Der pH-Wert der Lösungen 1 und 3 wurde mit verdünnter Natronlauge auf einen Bereich von 6 bis 8 eingestellt.

Die Vorlage wurde in einen Laborrührkessel gegeben, mit Stickstoff gespült und auf 85°C Innentemperatur erwärmt. Dann wurden gleichzeitig der Starterzulauf und der Reglerzulauf gestartet und mit konstanter Geschwindigkeit gleichzeitig in 3 Stunden zugefahren. Zur Vervollständigung der Polymerisation wurden die Polymerisationstemperatur von 85°C noch weitere 2 Stunden gehalten. Zur Entfernung flüchtiger Verunreinigungen wurde eine Wasserdampfdestillation angeschlossen und dabei ungefähr 500 g Wasser überdestilliert.

Die erhaltene farblose und niederviskose Lösung wies einen Feststoffgehalt von 25 Gew.-% auf und der K-Wert des Produktes (gemessen 1 Gew.-%ig in Wasser) lag bei 20,0. Als Verunreinigungen wurden 0,05 Gew.-% N-Vinylpyrrolidon und 0,095 Gew.-% Pyrrolidon gefunden.

### Beispiel 7

Es wurden die gleichen Lösungen, wie in Beispiel 3 verwendet, jedoch wurden in den Starterzulaufen 1 und 2 7,5 g und 2,5 g 4,4'-Azobis(4-cyanpentansäure)dinatriumsalz eingesetzt.

Fahrweise analog Beispiel 1.

Die erhaltene farblose und niederviskose Lösung wies einen Feststoffgehalt von 23,5 Gew.-% auf und der K-Wert des Produktes (gemessen 1 Gew.-%ig in Wasser) lag bei 17,8. Als Verunreinigungen wurden 0,007 Gew.-% N-Vinylpyrrolidon und 0,05 Gew.-% Pyrrolidon gefunden.

### Beispiel 8

Es wurden zunächst die folgenden Lösungen vorbereitet:
1. Vorlage, bestehend aus 500 g N-Vinylpyrrolidon, 1200 g Wasser.
2. Starterzulauf, bestehend aus 6,5 g tertiär-Butylperoxipivalat gelöst in 80 g Isopropanol.
3. Reglerzulauf, bestehend aus 100 g Wasser und 30 g 2-Mercaptoethanol.

Der pH-Wert der Lösungen wurde mit verdünnter Natronlauge auf einen Bereich von 6 bis 8 eingestellt.

Die Vorlage wurde in einen Laborrührkessel gegeben, mit Stickstoff gespült und auf 80°C Innentemperatur erwärmt. Dann wurden gleichzeitig der Starterzulauf und der Reglerzulauf gestartet und mit konstanter Geschwindigkeit gleichzeitig in 3 Stunden zugefahren. Zur Vervollständigung der Polymerisation wurden die Polymerisationstemperatur von 80°C noch weitere 2 Stunden gehalten. Zur Entfernung flüchtiger Verunreinigungen wurde eine Wasserdampfdestillation angeschlossen und dabei 500 g Wasser überdestilliert.

Die erhaltene farblose und niederviskose Lösung wies einen Feststoffgehalt von 28 Gew.-% auf und der K-Wert des Produktes (gemessen 1 Gew.-%ig in Wasser) lag bei 49,4. Als Verunreinigungen wurden 0,06 Gew.-% N-Vinylpyrrolidon und 0,066 Gew.-% Pyrrolidon gefunden.

### Beispiel 9

Es wurden zunächst die folgenden Lösungen vorbereitet:
1. Vorlage, bestehend aus 500 g N-Vinylpyrrolidon, 1200 g Wasser.
2. Starterzulauf, bestehend aus 6,5 g tertiär-Butylperoxipivalat gelöst in 80 g Isopropanol.
3. Reglerzulauf, bestehend aus 100 g Wasser und 30 g Natriumsulfit.

Der pH-Wert der Lösungen wurde mit verdünnter Natronlauge auf einen Bereich von 6 bis 8 eingestellt.

Die Vorlage wurde in einen Laborrührkessel gegeben, mit Stickstoff gespült und auf 85°C Innentemperatur erwärmt. Die Temperatur wurde eine halbe Stunde gehalten, dann wurden zur Vervollständigung der Polymerisation gleichzeitig der Starterzulauf und der Reglerzulauf in einer halben Stunde zugefahren. Zur Entfernung flüchtiger Verunreinigungen wird eine Wasserdampfdestillation durchgeführt und dabei 500 g Wasser überdestilliert.

Die erhaltene farblose und niederviskose Lösung wies einen Feststoffgehalt von 25 Gew.-% auf und der K-Wert des Produktes (gemessen 1 Gew.-%ig in Wasser) lag bei 29,4. Als Verunreinigungen wurden 0,05 Gew.-% N-Vinylpyrrolidon und 0,06 Gew.-% Pyrrolidon gefunden.

### Vergleichsbeispiel

Es wurden zunächst die folgenden Lösungen vorbereitet:
1. Vorlage, bestehend aus 500 g N-Vinylpyrrolidon und 1000 g Wasser.
2. Starterzulauf 1, bestehend aus 65 g H₂O₂ (30 Gew.-%ig) und 0,6 g CuCl₂-Lösung (0,01 Gew.-%ig).
3. Basenzulauf, bestehend aus 16 g Natriumhydroxid gelöst in 144 g Wasser.
4. Starterzulauf 2, bestehend aus 13 g H₂O₂ (30 Gew.-%ig) und 0,3 g CuCl₂-Lösung (0,01 Gew.-%ig).
5. Starterzulauf 3, bestehend aus 3,3 g H₂O₂ (30 Gew.-%ig).

Die Vorlage wurde in einen Laborrührkessel gegeben, mit Stickstoff gespült und auf 80°C Innentemperatur erwärmt. Dann wurden gleichzeitig der Starterzulauf und der Reglerzulauf gestartet und mit konstanter Geschwindigkeit gleichzeitig in 3 Stunden zugefahren. Zur Vervollständigung der Polymerisation wurde die Polymerisationstemperatur von 80°C noch weitere 2 Stunden gehalten. Zur Entfernung flüchtiger Verunreinigungen wurde eine Wasserdampfdestillation angeschlossen und dabei 500 g Wasser überdestilliert.

Die erhaltene farblose und niederviskose Lösung wies einen Feststoffgehalt von 20 % auf und der K-Wert des Produktes (gemessen 1 %ig in Wasser) lag bei 16,4. Als Verunreinigungen wurden 0,03 % N-Vinylpyrrolidon und 2,25 % Pyrrolidon gefunden.

## Patentansprüche

1. Verfahren zur Herstellung von niedermolekularen Homopolymerisaten des N-Vinylpyrrolidons durch Lösungspolymerisation in wäßrigem Medium in Gegenwart einer radikalbildenden Verbindung, dadurch gekennzeichnet, daß man die Polymerisation in Gegenwart eines Polymerisationsreglers, der eine Transferkonstante Cₓ größer 0,01 aufweist, durchführt.

2. Verfahren nach Anspruch 1, dadurch gekennzeichnet, daß man die Polymerisationsregler in Mengen von 0,1 bis 15 Gew.-%, bezogen auf die Monomerenmenge, einsetzt.

3. Verfahren nach Anspruch 1 oder 2, dadurch gekennzeichnet, daß man als Polymerisationsregler Mercaptoverbindungen, Dialkylsulfide und/oder Diarylsulfide zusetzt.
